# EUROPÄISCHE PATENTANMELDUNG

(11) **EP 0 858 188 A2**
(43) Veröffentlichungstag der Anmeldung: **12.08.1998**
(21) Anmeldenummer: 98200217.2
(22) Anmeldetag: 26.01.1998
(51) Int. Cl.: H04L 12/433

(54) **Lokales Netzwerk mit einer verteilten Vermittlungssoftware**

(30) Priorität: 05.02.1997 DE 19704288
(71) Anmelder: Philips Patentverwaltung GmbH, 22335 Hamburg (DE); Philips Electronics N.V., 5621 BA Eindhoven (NL)
(72) Erfinder: Duque-Anton, Manuel, Dr.-Ing. Dipl.-Inform., Röntgenstrasse 24, 22335 Hamburg (DE); Günther, Ralf, Dipl.-Inform., Röntgenstrasse 24, 22335 Hamburg (DE); Meuser, Thomas, Dr.rer.nat Dipl.-Inform., Röntgenstrasse 24, 22335 Hamburg (DE); Karabek, Raschid, Dipl.-Inform., Röntgenstrasse 24, 22335 Hamburg (DE)
(74) Vertreter: Volmer, Georg, Dipl.-Ing.

(57) **Zusammenfassung**

Die Erfindung bezieht sich auf ein lokales Netzwerk mit wenigstens einem Ringsystem, das mehrere über Ringanschlüsse gekoppelte Netzknoten enthält, die zur Kopplung mit einer Station oder einem Netzknoten eines anderen Ringsystems und jeweils zur Vermittlung von von einer Station oder einem Netzknoten erzeugten Paketen vorgesehen sind. Es ist eine wenigstens für die Vermittlung zuständige und über alle Netzknoten und Stationen verteilte Vermittlungssoftware vorgesehen. Die die verteilte Vermittlungssoftware stellt für jeweils eine Anwendung ein Objekt zur Verfügung, welches jeweils mit einer Komponente einer Objektrahmensoftware zur Objektregistrierung und zur Lenkung der Nachrichten von und zum Objekt verknüpft ist. Die verteilte Vermittlungssoftware ist auf jedem Netzknoten und jeder Station als eine Verteilungsseinheit vertreten, die jeweils zur Übertragung und Steuerung der Nachrichten zwischen Objekten in einer Station oder einem Netzknoten und mit einer anderen Verteilungseinheit vorgesehen ist.

## Beschreibung

Die Erfindung bezieht sich auf ein lokales Netzwerk mit mehreren Netzknoten, die jeweils mit wenigstens einer Station und/oder wenigstens einem anderen Netzknoten gekoppelt sind und jeweils zur Vermittlung von Paketen vorgesehen sind, die von einer Station oder einem Netzknoten erzeugt worden sind.

Ein lokales Netzwerk (LAN) zur Paketübertragung ist aus der DE 195 32 421 C1 bekannt. Das Paketübertragungsverfahren arbeitet nach dem asynchronen Transfermodus. Das lokale Netzwerk enthält mehrere Ringsysteme mit einem oder zwei Ringen. Ein Ringsystem enthält mehrere Netzknoten, die entweder über Stationsanschlüsse mit einer Station oder einem Netzknoten eines anderen Ringsystems gekoppelt sind und die jeweils zur Vermittlung von von einer Station oder von einer Netzwerkschnittstelle erzeugten Zellen vorgesehen sind. Über einen Ring werden Zellen übertragen, die Adreßinformationen über den Bestimmungsort beispielsweise einer bestimmten Station enthalten. Die Steuervorgänge in einem Netzknoten werden von wenigstens einer Steueranordnung durchgeführt, die eine entsprechende nach Hardwareanforderungen gestaltete Software enthalten muß.

Bei Verwendung eines asynchronen Transfermodus in einem System werden Nutzinformationen, z.B. Fernsprech-, Bild- oder Tonsignale, in Blöcken fester Länge über Anordnungen zur digitalen Signalverarbeitung gesendet. Als ein Block fester Länge wird eine Zelle bezeichnet, die eine vorbestimmte Anzahl von Bytes (53 Bytes) aufweist. Jede Zelle besteht aus einem Kopffeld mit einer Länge von 5 Byte und einem Informationsfeld, in dem die Nutzinformation untergebracht ist, mit einer Länge von 48 Byte. In einem solchen Kopffeld sind Adreßinformationen, Daten zur Fehlererkennung und Daten für Steuerinformationen vorhanden. Unter Adreßinformationen fallen Bündelkennungen und Verbindungskennungen. Zur Übermittlung einer Zelle wird anhand der Verbindungskennung, die auch als VCI (Virtual Channel Identifier) bezeichnet wird, ein virtueller Kanal zur Verfügung gestellt. In der Regel wird ein VCI nach Erreichen einer Vermittlungsstelle jeweils verändert. Ein Bündel mehrerer virtueller Kanäle wird als virtueller Pfad (VPI = Virtual Path Identifier) bezeichnet, der durch die Bündelkennung gekennzeichnet wird.

Der Erfindung liegt daher die Aufgabe zugrunde, ein lokales Netzwerk zu schaffen, bei welchen Softwareanwendungen laufen, die unabhängig von der zugrundeliegenden Hardware sind.

Die Erfindung wird durch ein lokales Netzwerk der eingangs genannten Art dadurch gelöst,
daß eine wenigstens für die Vermittlung zuständige und über alle Netzknoten und Stationen verteilte Vermittlungssoftware vorgesehen ist,
daß die verteilte Vermittlungssoftware für jeweils eine Anwendung ein Objekt zur Verfügung stellt, welches jeweils mit einer Komponente einer Objektrahmensoftware zur Objektregistrierung und zur Lenkung der Nachrichten von und zum Objekt verknüpft ist, und
daß auf jedem Netzknoten und jeder Station ein als Verteilungseinheit bezeichnetes Objekt der verteilten Vermittlungssoftware enthalten ist, welches jeweils zur Übertragung und Steuerung der Nachrichten zwischen Objekten in einer Station oder einem Netzknoten und mit einer anderen Verteilungseinheit vorgesehen ist.

Das erfindungsgemäße lokale Netzwerk enthält eine verteilte Vermittlungssoftware, welche die Kommunikation zwischen den verschiedenen Systemteilen steuert. Ein Systemteil ist ein Netzknoten oder eine Station. Für eine Anwendung in dem lokalen Netzwerk muß jeweils ein Softwareobjekt auf dem betreffenden Systemteil zur Verfügung gestellt werden. Eine Anwendung stellt beispielsweise eine Signalisierungsfunktion, eine Überwachungsfunktion etc. dar. Das Objekt sollte dabei auf dem Systemteil installiert sein, auf dem die Funktion benötigt wird. Einem Objekt ist eine Komponente einer Objektrahmensoftware zugeordnet, welche die Nachrichtenströme von und zum Objekt lenkt und zur Objektregistrierung dient. Ein Objekt und die zugeordenete Komponente der Objektrahmensoftware wird ein eingebettetes Objekt genannt. Die Kommunikation zwischen den eingebetteten Objekten wird über andere Softwarekomponenten durchgeführt, die Verteilungeinheiten genannt werden. Eine Verteilungseinheit muß auf jedem Systemteil vorhanden sein, während die anderen Objekte nur auf einem solchen Systemteil vorhanden sind, auf dem sie benötigt werden. Die Übertragung einer Nachricht von einem Objekt eines ersten Netzknotens zu einem Objekt eines zweiten Netzknotens wird über die jeweiligen zugeordneten Verteilungseinheiten abgewickelt. Die Kommunikation zwischen zwei Objekten eines Sytemteils läuft dagegen nur über die zugeordnete Verteilungseinheit.

Durch diese hardware- und anwendungsunabhängige Strukturierung der verteilten Vermittlungssoftware können die Aufgaben auf mehrere Netzknoten verteilt werden und somit eine parallele und lokale Bearbeitung von Teilproblemen effizienter ermöglichen. Mit dieser verteilten Vermittlungssoftware läßt sich im lokalen Netzwerk eine zentrale Vermittlungsfunktion realisieren, obwohl die Vermittlungsfunktion hardwaremäßig über das lokale Netzwerk in den einzelnen Netzknoten verteilt ist. Die Entwicklung von Softwareanwendungen kann unabhängig von der zugrundeliegenden Hardware erfolgen und somit die Entwicklung vereinfachen und beschleunigen.

Es sei darauf hingewiesen daß ein solches lokales Netzwerk auch aus Netzknoten bestehen kann, die drahtlose Ringverbindungen aufweisen. Die Ringanschlüsse sind in diesem Fall z.B. über Funk-, Infrarot- oder Ultraschallempfänger und -sender realisiert.

Die Ansprüchen 2 und 3 beziehen sich auf die Eigenschaften der Objektrahmensoftware und die einzelnen einem Objekt zugeordneten Komponenten. Ein Objekt und eine zugeordnete Komponente der Objektrahmensoftware wird als eingebettetes Objekt bezeichnet. Die Ansprüche 4 bis 7 beziehen sich auf die Verteilungseinheit und deren Komponenten.

Ausführungsbeispiele der Erfindung werden nachstehend anhand der Figuren näher erläutert. Es zeigen:
- Fig. 1: ein lokales Netzwerk,
- Fig. 2: ein in dem lokalen Netzwerk nach Fig. 1 verwendeter Netzknoten mit 2 Ringanschlüssen,
- Fig. 3: ein in dem lokalen Netzwerk nach Fig. 1 verwendeter Netzknoten mit 4 Ringanschlüssen,
- Fig. 4: ein Schichtenmodell über die in dem lokalen Netzwerk verwendete Software,
- Fig. 5: die Architektur einer verteilten Vermittlungssoftware, die einen Teil der in Fig. 4 gezeigten Software bildet,
- Fig. 6: eine schematische Skizze zur Erläuterung der Objektrahmensoftware, die Bestandteil der verteilten Vermittlungssoftware ist,
- Fig. 7: eine schematische Skizze zur Erläuterung der Funktion der Verteilungsebene, die Bestandteil der verteilten Vermittlungssoftware ist,
- Fig. 8 und 9: schematische Skizzen zur Erläuterung der Funktion der Verteilungseinheit, die Bestandteil der Verteilungsebene ist,
- Fig. 10: ein einfaches lokales Netzwerk mit einem Doppelring und vier Netzknoten,
- Fig. 11: das in Fig. 10 dargestellte lokale Netzwerk mit einer Ring unterbrechung und einer Schleife zwischen innerem und äußeren Ring in einem Netzknoten,
- Fig. 12 und 13: eine schematische Skizze zur Darstellung der Interaktionen zwischen verschiedenen Objekten zur Detektierung einer Ringunterbrechung in dem lokalen Netzwerk nach Fig. 10 und einer Rekonfigurierung nach Fig. 11 und
- Fig. 14 bis 16: Darstellungen von Prozeduren der Funktionen und Aktionen der in den Fig. 12 und 13 dargestellten Objekte.

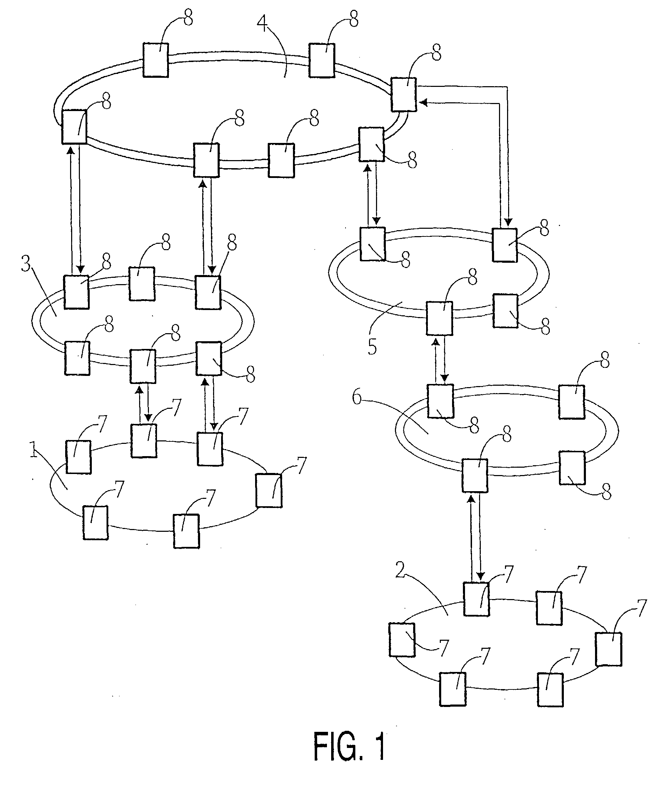

In Fig. 1 ist ein Ausführungsbeispiel eines lokalen Netzwerks mit sechs Ringsystemen 1 bis 6 dargestellt. Ein Ringsystem 1 bis 6 kann entweder aus einem oder zwei Ringen bestehen. Die Ringsysteme 1 und 2 enthalten einen und die Ringsysteme 3 bis 6 zwei Ringe. Ein Ring stellt einen geschlossenen Signalweg über mehrere Netzknoten 7 bzw. 8 dar. Die Ringsysteme 3 bis 6 bilden jeweils zwei gegenläufige Ringe, d.h. die Signale laufen auf den Ringen jeweils in entgegengesetzter Richtung. Ein Netzknoten 7 bzw. 8, der in den Ringsystemen 1 bis 6 jeweils als Rechteck dargestellt ist, weist zwei oder vier Ringanschlüsse und zwei Stationsanschlüsse auf.

An die Stationsanschlüsse ist entweder eine Station oder ein Netzknoten 7 bzw. 8 eines anderen Ringsystems angeschlossen. Stationsanschlüsse sind in der Fig. 1 nur bei den Netzknoten 7 und 8 dargestellt, welche eine Verbindung mit einem anderen Netzknoten aufweisen. Beispielsweise sind in der Fig. 1 für das Ringsystem 4 insgesamt drei Netzknoten mit Stationen und vier Netzknoten mit Netzknoten der Ringsysteme 3 und 5 verbunden. Eine Station kann beispielsweise ein Fernsprecher, ein Bildfernsprecher, ein Personal-Computer oder eine Workstation sein. Die Nachrichten bzw. Informationen, die von den Stationen bzw. den Netzknoten stammen, werden nach dem asynchronen Transfermodus mittels Zellen übertragen. Eine Zelle enthält ein Kopffeld mit 5 Byte und ein Informationsfeld mit 48 Byte.

Die im Kopffeld der Zelle enthaltenen Informationen dienen insbesondere zur Wegesuche und zur Durchführung von Vermittlungsfunktionen.

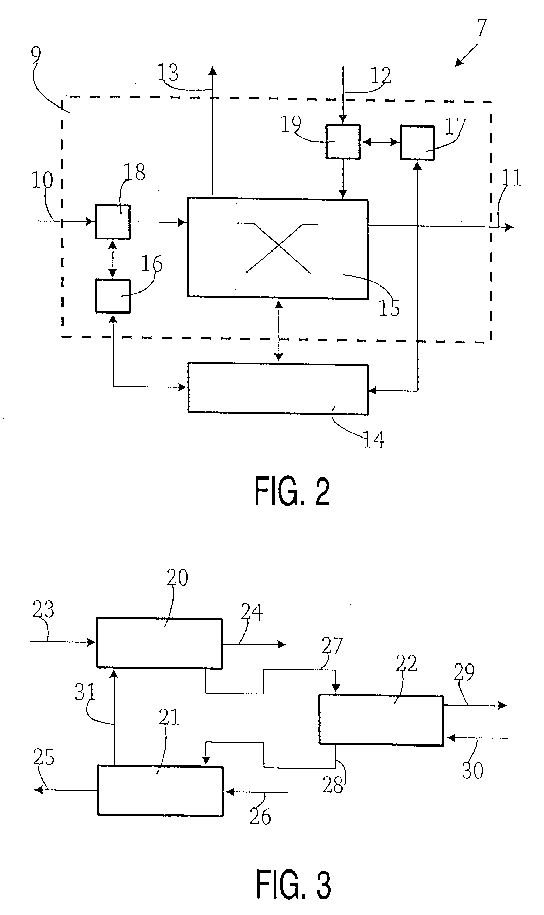

Ein Netzknoten 7 aus einem Schaltungselement mit zwei Ringanschlüssen ist in der Fig. 2 detaillierter dargestellt. Der Netzknoten 7 enthält eine Koppelvorrichtung 9, die mit Ring- und Stationsanschlüssen 10 bis 13 gekoppelt ist und den Zellenstrom weitervermittelt. Die Koppelvorrichtung 9 erhält einen Zellenstrom von einem anderen Netzknoten über den Ringanschluß 10 und von einer Station oder einem Netzknoten eines anderen Ringsystems über den Stationsanschluß 12 und leitet einen Zellenstrom über den Ringanschluß 11 zu einem anderen Netzknoten und über den Stationsanschluß 13 zu einer Station oder einem Netzknoten eines anderen Ringsystems.

In dem Netzknoten 7 ist noch eine die Koppelvorrichtung 9 steuernde Steueranordnung 14 enthalten, die beispielsweise ein Mikroprozessor ist und ebenfalls Zellen erhält und erzeugt. In der Koppelvorrichtung 9 ist noch ein Koppelfeld 15, zwei Wegespeicheranordnungen 16 und 17 und zwei Empfangsschaltungen 18 und 19 enthalten. In den Empfangsschaltungen 18 und 19 werden jeweils die Kopffelder von über Anschlüssen 10 und 12 ankommenden Zellen ausgewertet.

Im Kopffeld enthaltene Adresseninformationen werden zur Ansteuerung verschiedener Tabellen für die mit den Empfangsschaltungen 18 und 19 verbundenen Wegespeicheranordnungen 16 und 17 verwendet. Die in den Tabellen abgelegten Daten werden jeweils von den Empfangsschaltungen 18 und 19 verwendet, um die weitere Verarbeitung und Weiterleitung der Zelle zu organisieren. Beispielsweise kann die Empfangsschaltung 18 die Zelle kopieren und mit neuen Adresseninformationen versehen. Die Originalzelle wird z.B. über das Koppelfeld 15 an den Stationsanschluß 13 und die kopierte Zelle über das Koppelfeld 15 an den Ringanschluß 11 gegeben. Es besteht noch die Möglichkeit, daß das Koppelfeld 15 diese Kopierfunktion durchführt.

Die Empfangsschaltung 18 ist mit dem Ringanschluß 10 gekoppelt und leitet empfangene Zellen zum Koppelfeld 15 weiter. Die Wegespeicheranordnung 16 ist mit der Empfangschaltung 18 verbunden. Zwischen dem Koppelfeld 15 und dem Stationsanschluß 12 ist die Empfangsschaltung 19 angeordnet, die mit der Wegespeicheranordnung 17 verbunden ist.

Über die Ringanschlüsse 10 und 11 des Ringes und über die Stationsanschlüsse 12 und 13 werden zwei Arten von Nutzzellen übertragen. Einerseits Anwenderzellen, die in ihrem Informationsfeld z. B. Nachrichten oder Daten des Benutzers einer zuvor aufgebauten Verbindung enthalten und andererseits Kontrollzellen, die in ihrem Informationsfeld z.B. Steuerungsinformationen enthalten.

Ein Netzknoten mit vier Ringanschlüssen läßt sich aus drei Schaltungselementen mit jeweils zwei Ringanschlüssen, wie in Fig. 2 gezeigt, bilden. In Fig. 3 sind drei Schaltungselemente 20, 21 und 22 dargestellt. Die Ringanschlüsse 23 und 24 des Schaltungselements 20 und die Ringanschlüsse 25 und 26 des Schaltungselements 21 bilden auch bei dieser Zusammenschaltung Ringanschlüsse. Der Stationsanschluß 27 des Schaltungselements 20 ist der Ringanschluß des Schaltungselements 22, deren Stationsanschlüsse 29 und 30 auch die Stationsanschlüsse bei dieser Zusammenschaltung sind. Der weitere Ringanschluß des Schaltungselements 22 ist mit dem Stationsanschluß 28 der Schaltungselements 21 verbunden. Der Stationsanschluß 31 verbindet noch die beiden Schaltungselemente 20 und 21.

Ein Netzknoten leitet also Zellen von einem Ringanschluß zu dem anderen Ringanschluß des gleichen Rings, zu einem Stationsanschluß oder auch bei vier Ringanschlüssen zu dem Ringanschluß des anderen Rings. Eine Zelle auf einem Stations- oder Stationsanschluß wird zu einem Ringanschluß weitergegeben. Zellen können auch von der Steueranordnung eines Schaltungselements empfangen und gesendet werden.

Bestimmte Bits im Kopffeld einer Zelle sind für den VCI (virtual channel identifier) reserviert. Der VCI gibt nach Normungsvorschlägen den Bestimmungsort einer Zelle und damit eine virtuelle Verbindung an. Des weiteren sind bestimmte Bits im Kopffeld der Zelle für den VPI (virtual path identifier) reserviert, der ein Bündel mehrerer virtueller Verbindungen angibt. Für den VPI sind im Kopffeld der Zelle nach derzeitigen Normungsbestimmungen 8 Bit und für den VCI 16 Bit vorgesehen.

Der VCI und der VPI werden bei diesem Ausführungsbeispiel für andere Informationen als bei den Normungsvorschlägen vorgesehen. Der VPI enthält Informationen über die Adresse (Adresseninformationen) bzw. den Bestimmungsort (Netzknoten) einer Zelle in einem Ringsystem. Der VCI wird für die Angabe über die anwenderbezogene Kennung für eine Verbindung, die Art der Verbindung und die Zellenart verwendet. Außerdem wird der VCI als Adresse für ein Ringsystem benutzt.

Die Wegespeicheranordnungen 16 und 17 des Schaltungselements 7 enthalten Informationen die von den zugeordneten Empfangsschaltungen 18 und 19 ausgewertet werden, um die weitere Verarbeitung und Weiterleitung der empfangenen Zelle zu organisieren. Beispielsweise kann eine Zelle mit einer anderen Adresse versehen werden, kopiert oder gelöscht werden. Die Wegespeicheranordnungen 16 und 17 können von der Steueranordnung 14 beispielsweise im Fehlerfall oder aufgrund bestimmter Informationen des Netzwerkmanagementsystems verändert werden.

Bei einer Verbindung zwischen einem Netzknoten eines ersten Ringsystems und einem Netzknoten eines zweiten Ringsystems müssen bei einem Übertritt einer Zelle von einem Ringsystem in ein anderes Veränderungen des VPI und des VCI durchgeführt werden. Hierzu sind vor dem Verbindungsaufbau entsprechende Einträge in den Wegespeicheranordnungen vorgenommen worden.

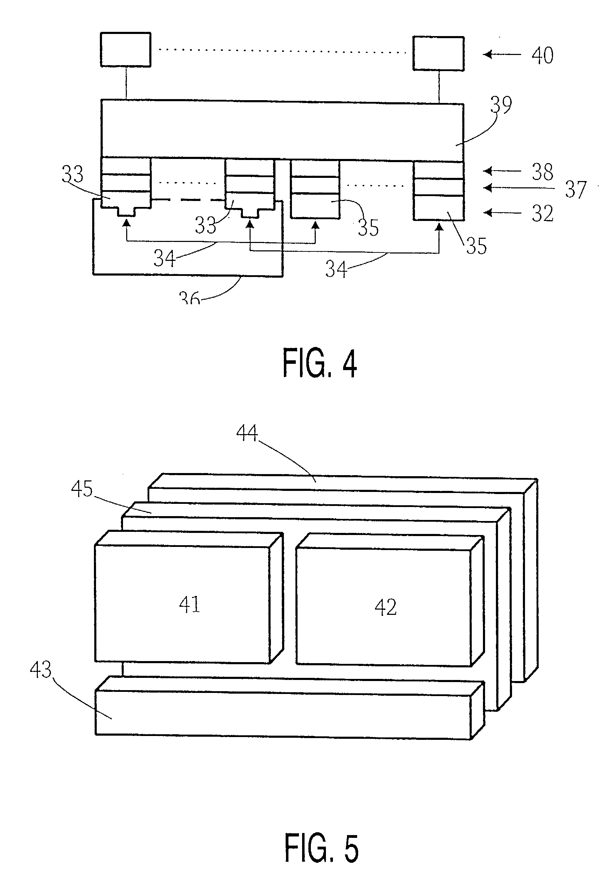

Für die verschiedenen Aufgaben der Netzknoten 7 bzw. 8 in dem lokalen Netzwerk werden verschiedene Softwarekomponenten benötigt. Die Softwarearchitektur in dem lokalen Netzwerk läßt sich anhand des in Fig. 4 gezeigten Schichtenmodells erläutern. Die unterste oder erste Schicht 32 bildet die physikalische Schicht (Hardware), welche aus den Netzknoten 33 und an die Stationsanschlüsse 34 der Netzknoten 33 angeschlossene Stationen 35 besteht. In der Fig. 4 ist aus Vereinfachungsgründen nur ein Ring 36 angedeutet. Die Hardware kann jedoch mehrere Ringe - wie in Fig. 1 gezeigt - enthalten. Die zweite Schicht 37 bildet das Betriebssystem. Hier kann beispielsweise "pSOS" der Firma "Integrated Systems, Inc." als Betriebssystem verwendet werden. Die dritte Schicht 38 beinhaltet eine hardware-spezifische Software (Firmware) für die Netzknoten 33 oder eine Treibersoftware für die Stationen 35. Die Funktion der Firmware ist, Steuervorgänge im Netzknoten 33 durchzuführen, wie z.B. Zellen empfangen und senden und die Einträge in den Wegespeicheranordnungen 16 und 17 (Fig. 2) zu verändern.

Die vierte Schicht 39 enthält die Software, welche die Netzknoten 33 und die Stationen 35 verbindet und auf den verschiedenen Netzknoten 33 und Stationen 35 nach der jeweiligen Vermittlungsaufgabe und -funktion verteilt ist und als verteilte Vermittlungssoftware bezeichnet wird. Die verteilte Vermittlungssoftware weist offene Schnittstellen (open interfaces) auf, um Anwendungsprogramme einbinden zu können (vgl. hierzu: M.Elixmann er al.: "Open Switching - Extending Control Architectures to Facilitate Applications, Proc. of ISS'95, vol. 2, April 1995, Seiten 239 - 243). Diese Anwendungsprogramme bilden die fünfte Schicht 40 in dem Schichtenmodell der Fig. 4.

Die Architektur der verteilten Vermittlungssoftware läßt sich mit Hilfe der Fig. 5 erläutern. Für die Vermittlungsanwendungen ist eine Steuerungssoftware 41 (control) und eine Managmentsoftware 42 zuständig. Die Steuerungssoftware 41 organisiert z.B. die Signalisierung bzw. die Vermittlungsfunktionen im lokalen Netzwerk und die Managmentsoftware 42 erfüllt z.B. Netzwerkmanagementfunktionen, wie Fehlerbehandlung, Sicherheitsaspekte etc. Die Softwarekomponenten 41 und 42 greifen auf eine Informationsverwaltungssoftware 43 (information repository) zu, welche Daten für beide Komponenten 41 und 42 speichert und verfügbar macht und im folgenden als Informationsverwaltung 43 bezeichnet wird. Diese Daten werden über eine gemeinsame Softwareschnittstelle übertragen. Ferner speichert die Informationsverwaltung 43 zusätzlich den Systemstatus den die Steuerungs- und Managementsoftware 41 und 42 gemeinsam nutzen. Beispielsweise wird mit dem Systemstatus angegeben, in welcher Betriebsart sich eine Hardwarekomponente befindet oder auch Fehlerraten. Bei einer Veränderung des Systemstatus wird dies in der jeweils betroffenen Hardware und Firmware und spiegelbildlich in der Informationsverwaltung 43 abgelegt.

Die Steuerungs-, Management- und Informationsverwaltungssoftware 41, 42 und 43 bestehen aus mehreren Softwareobjekten, welche ohne Wissen über den Standort des jeweiligen Kommunikationspartners (anderes Objekt) Nachrichten austauschen. Ein solcher Austausch wird ermöglicht durch eine über das gesamte lokale Netzwerk verteilte Software, die im folgenden als Verteilungsebene 44 (distribution plane) bezeichnet wird und welche den Softwarekomponenten 41 bis 43 die Kommunikation mit anderen Objekten ermöglicht.

Zur verteilten Vermittlungssoftware gehört außer der Steuerungs- und Managementsoftware 41 und 42, der Informationsverwaltung 43 und der Verteilungsebene 44 noch eine Objektrahmensoftware 45, die jedem Objekt einen Objektrahmen (object framework) zuordnet. Mit der Hilfe der Objektrahmensoftware 45 wird eine Objektregistrierung und eine Kommunikation zwischen Objekten ermöglicht.

In der verteilten Vermittlungssoftware werden Objekte mit den im folgenden geschilderten Funktionen verwendet. Zu Beginn der Lebensdauer eines Objekts meldet dieses seine Anwesenheit und seine Methoden der Verteilungsebene 44, welche das Objekt anderen Objekten zugänglich macht. Nachdem ein Objekt und seine Methoden registriert worden sind, kann das Objekt mit jedem anderen bereits registrierten Objekt der verteilten Vermittlungssoftware kommunizieren. Die Objektrahmensoftware stellt einem Objekt Referenzen zur Verfügung, durch die andere Objekte adressiert werden. Bei dem ersten Aufruf benötigt ein Objekt eine Referenz von der Verteilungsebene 44. Nach der Initialisierung wird die Referenz gespeichert und für die folgenden Methodenaufrufe desselben Objekts verwendet. Der Aufruf einer Methode eines Objektes in einem anderen Objekt wird durch Aussenden einer Nachricht (message) durchgeführt. Diese Nachricht zeigt das andere (entfernte) Objekt, die aufgerufene Methode und die entsprechenden Parameter an.

Die im vorhergehenden Absatz beschriebenen Objekte werden im folgenden eingebettete Objekte (embedded objects) genannt und sind ein Grundelement der verteilten Vermittlungssoftware. Die Objektrahmensoftware stellt die notwendige Umgebung für ein eingebettes Objekt zur Verfügung. Eingebettete Objekte besitzen mindestens einen Thread, um Meldungen über einen Methodenaufruf von anderen Objekten abzuarbeiten. Hierbei können auch Objekte mit mehreren Threads aufgerufen werden, in denen Methodenaufrufe parallel ausgeführt werden.

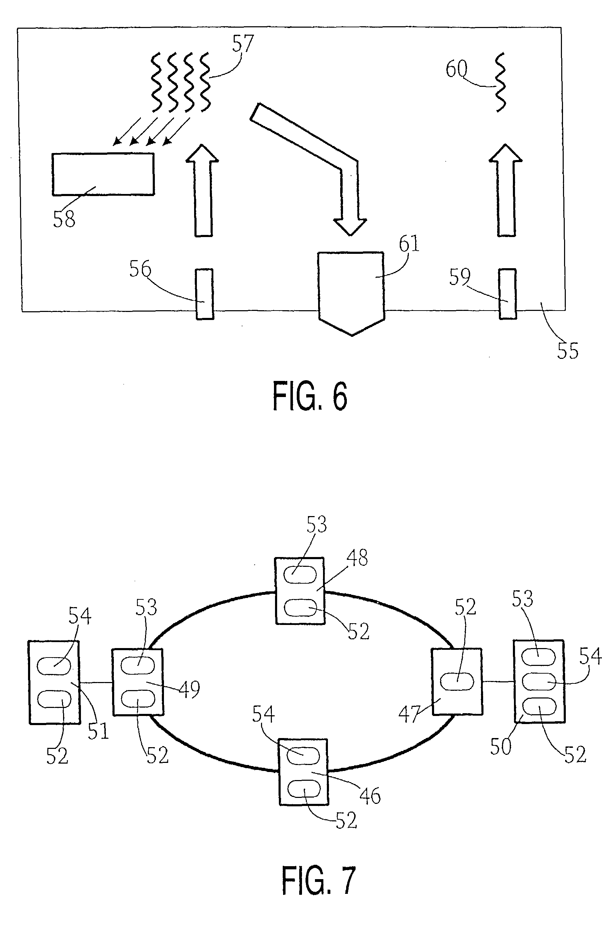

Die Funktion der Objektrahmensoftware wird anhand der Fig. 6 näher erläutert. Ein Objektrahmen ist in Fig. 6 symbolisch als Rechteck 55 dargestellt und behandelt verschiedene Nachrichtenströme. Im folgenden werden zuerst die Nachrichtenströme der Verteilungsebene 44 zur Objektrahmensoftware 45 erläutert. Erste Nachrichten zum Aufruf einer Methode (method invocation messages) eines Objektes, welches der Objektrahmen umgibt, werden über eine Aufrufwarteschlange 56 (invoke queue) zu dem eingebetteten Objekt gesendet, um eine Objektmethode aufzurufen. Die eintreffenden Nachrichten werden von Threads 57 zur Methodenausführung (method execution threads) behandelt. Zur Bestimmung der Objektmethode wird eine Liste 58 für die extern aufrufbaren Methoden (external callable method list) durchsucht.

Die Threads 57 zur Methodenausführung rufen die entsprechende Methode auf, nachdem diese in der Liste 58 gefunden worden ist.

Weitere Nachrichten werden einer Antwortwarteschlange 59 des Objektrahmens zugeführt. Nachdem das dem Objektrahmen zugeordnete eingebettete Objekt eine Methode in einem anderen Objekt aufgerufen hat, wird von diesem anderen Objekt eine Antwort (replies on method invocation messages) über die Antwortwarteschlange 59 zu einem Threads 60 zur Antwortbehandlung (reply handler thread) des Objektrahmens gesendet. Die Threads 57 zur Methodenausführung, welche auf diese Antwort warten, werden bestimmt und der Nachrichteninhalt von dem Thread 60 wird zu den Threads 57 übertragen.

Ein weiterer Nachrichtenstrom (requests to the distribution plane) läuft von der Objektrahmensoftware 45 zur Verteilungsebene 44. Hierbei wird durch eine Meldung zur Verteilungsebene 44 über ein spezielles Objekt, welches als Rumpf-Objekt 61 (stub object) bezeichnet wird, die Registrierung eines eingebetteten Objekts und seiner Methode durchgeführt.

Die Objektrahmensoftware 45 und die Verteilungsebene 44 sind aufeinanderbezogene Softwarekomponenten. Wie oben erwähnt, ermöglicht die Objektrahmensoftware 45 Softwarekomponenten als eingebettete Objekte zu verwenden. Die Verteilungsebene 44 dient zur Kommunikation der eingebetteten Objekte. Die Verteilungsebene 44 ist die Komponente der verteilten Vermittlungssoftware, welche die Nachrichtenströme zwischen Objekten verteilt. Außerdem kennt sie die verschiedenen Objekte und hat die Kenntnis, auf welchem Systemteil sie installiert sind. Unter einem Systemteil ist eine Station oder ein Netzknoten zu verstehen. Die Funktionen der Verteilungsebene 44 werden durch Interaktionen von autonomen Verteilungseinheiten (distribution plane entities) realisiert, welche auf jedem Systemteil angeordnet sind. Jede Verteilungseinheit besitzt die Funktionalität eines Namens-Servers und eines Distributors. Die beiden Funktionalitäten in jeder Verteilungseinheit bestehen aus Effizienzgründen nicht aus eingebetteten Objekten. So benutzen sie beispielsweise einen gemeinsamen Speicherbereich.

Der Distributor ist für die Weiterleitung empfangener Nachrichten verantwortlich, die von der Firmware und von Objekten stammen. Ankommende Nachrichten werden entweder zu den eingebetteten Objekten, welche sich auf dem zugeordneten Systemteil befinden, oder zu der zugeordneten Firmware weitergeleitet, welche die Versendung von Nachrichten über den Ring organisiert.

Der Namens-Server speichert die Information über alle registrierten Objekte auf einem Systemteil. Der Aufenthaltsort eines Objektes wird in einer lokalen Objekttabelle gespeichert, die auf jedem Systemteil vorhanden ist. Die Gesamtheit aller lokalen Objekttabellen liefert die Information über alle registrierten Objekte im lokalen Netzwerk (Gesamtsystem). Der Namens-Server liefert die Information, wo sich ein bestimmtes Objekt befindet.

Die Aufgabe und die Funktion der Verteilungseinheit kann anhand der Fig. 7 erläutert werden, die vier Netzknoten 46 bis 49 zeigt, die über einen Ring miteinander gekoppelt sind. Mit dem Netzknoten 47 ist beispielsweise ein Personal-Computer (PC) 50 und mit dem Netzknoten 49 eine Workstation 51 verbunden. In jedem Systemteil (Netzknoten 46 bis 49, Personal-Computer 50 und Workstation 51) ist eine Verteilungseinheit 52 der Verteilungsebene 44 enthalten. Im Gegensatz dazu werden die Steuerungs- und Managementsoftware 41 und 42 und die Informationsverwaltung 43 auf mehrere eingebettete Objekte verteilt, die aber nicht auf jedem Systemteil vorhanden sein müssen. In der Fig. 7 ist z.B. die Steuerungssoftware 41 in den Netzknoten 48 und 49 und in dem Personal-Computer 50 als jeweils ein eingebettetes Objekt 53 und die Managementsoftware 42 in dem Netzknoten 46, dem Personal-Computer 50 und der Workstation 51 als jeweils ein eingebettetes Objekt 54 enthalten.

Die Verteilungsebene 44 weist verschiedene externe Softwareschnittstellen beispielsweise zur Firmware und zur Objektrahmensoftware 45 auf. Zwischen den Verteilungseinheiten gibt es interne Schnittstellen. Die Firmware weist eine nachrichtenorientierte Schnittstelle zur Verteilungsebene 44 auf. Die Verteilungseinheiten benutzen die Firmware, um Informationen mit Hilfe von Zellen beispielsweise zu anderen Systemteilen zu senden oder von den anderen Systemteilen zu empfangen. Ein Objektrahmen kommuniziert nur direkt mit den Verteilungseinheiten, welche auf demselben Systemteil plaziert sind. Außerdem ist ein Objektrahmen dafür zuständig, die Verteilungsebene 44 über die Initialisierung eines Objektes und über die Präsenz des eingebetteten Objektes zu unterrichten.

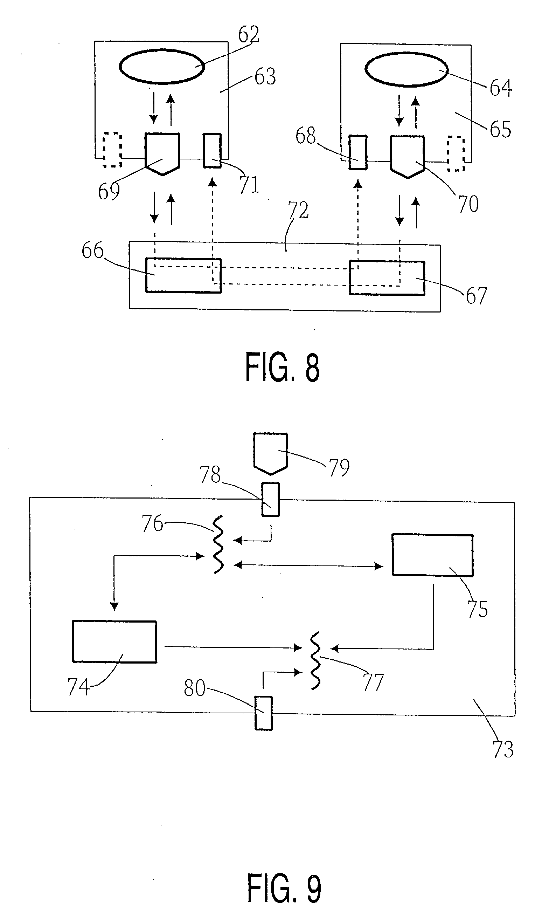

Zur Erläuterung der Kommunikation zwischen Objektrahmensoftware 45 und Verteilungsebene 44 ist Fig. 8 vorgesehen. Ein erstes eingebettetes Objekt 62 auf einem ersten Netzknoten 63 kommuniziert mit einem zweiten eingebetteten Objekt 64 auf einem zweiten Netzknoten 65. Das erste eingebettete Objekt 62 liefert eine Nachricht zu einem Methodenaufruf über eine erste dem Netzknoten 63 zugeordnete Verteilungseinheit 66 und eine zweite dem Netzknoten 65 zugeordnete Verteilungseinheit 67 zur Aufrufwarteschlange 68 des eingebetteten Objekts 64. Das erste eingebettete Objekt 62 benutzt dabei ein Rumpf-Objekt 69, um die Nachricht vom eingebetteten Objekt 62 zur Verteilungseinheit 66 zu senden. Die Antwort des eingebetteten Objekts 64 wird über dessen zugeordnetem Rumpf-Objekt 70, die Verteilungseinheiten 67 und 66 zu einer dem eingebetteten Objekt 63 zugeordneten Antwortwarteschlange 71 gesendet. Die Verteilungsebene 44, welche die Verteilungseinheiten 66 und 67 beinhaltet, ist in der Fig. 8 durch ein Rechteck 72 angedeutet. Die Nachrichten zwischen den Verteilungseinheiten 66 und 67 werden mittels Zellen über den Ring übertragen. Hierbei läuft die Kommunikation zwischen Verteilungsebene 44 und Hardware über die Firmware.

Wie in Fig. 8 zu sehen, besteht die Verteilungsebene aus mehreren Verteilungseinheiten. Jedoch nur eine Verteileinheit ist pro Systemteil vorhanden. Jede Verteileinheit läuft als ein Prozeß mit mehreren Threads, wobei die Kommunikation zu dem Objektrahmen über nachrichtenorientierte Schnittstellen (Rumpf-Objekte) abgewickelt wird.

Jede Verteilungseinheit 73 enthält zwei Tabellen 74 und 75, wie dies in Fig. 9 dargestellt ist. Die Tabelle 74 speichert die eingebetteten Objekte eines Systemteils. Jedes Objekt gehört zu einer spezifischen Klasse. Die andere Tabelle 75 dient zur Speicherung der Methoden für jede registrierte Objektklasse eines Systemteils. Dies impliziert, daß die Methode von mehreren Objekten derselben Klasse nur einmal gespeichert werden muß.

Zwei unterschiedliche Threads 76 und 77 enthält die Verteilungseinheit 73. Der Thread 76 ist für die Kommunikation zwischen der Objektrahmensoftware 45 und der Verteilungsebene 44 zuständig. Der andere Thread 77 empfängt Meldungen von nicht auf dem betreffenden Systemteil angeordneten Verteilungseinheiten.

Der Thread 76 empfängt Nachrichten oder Meldungen von eingebetteten Objekten, die der betreffenden Verteilungseinheit 73 zugeordnet sind. Die Nachrichten werden von einer einzelnen Nachrichtenwarteschlange 78 empfangen. Ein Rumpf-Objekt 79 des Objektrahmens, welches eine nachrichtenorientierte Softwareschnittstelle enthält, liefert die entsprechenden Nachrichten an die Nachrichtenwarteschlange 78.

Der Thread 76 ist zum Auffrischen der zwei lokalen Tabellen 74 und 75 verantwortlich. Hierzu kommuniziert der Thread 76 mit allen anderen Verteilungseinheiten der Verteilungsebene. Bevor ein neues Objekt in der zugeordneten Verteilungseinheit registriert werden kann, muß getestet werden, ob dieses neue Objekt nicht mit irgendeinem anderen Objekt in dem System kollidiert. Des weiteren ist der Thread 76 dafür verantwortlich, daß Nachrichten von einem Objekt zu einem anderen Objekt gesendet werden. Bei einem Objekt innerhalb des zugeordenten Systemteils erfolgt die Kommunikation direkt zwischen Thread 76 und dem betreffenden Objekt, indem die Nachricht direkt zu der entsprechenden Aufrufwarteschlange gesendet wird. In dem anderen Fall läuft die Kommunikation über Kontrollzellen zu einer Verteilungseinheit in einem anderen Systemteil.

Der Thread 77 empfängt Nachrichten über eine Antwortwarteschlange 80 von einer Verteilungseinheit anderer Systemteile. Im speziellen empfängt der Thread 77 Antworten zu Methodenaufrufen, die von dem Thread 76 veranlaßt und von einer Verteilungseinheit eines anderen Systemteils gesendet worden sind.

Weiter hat die Verteilungsebene 44 die Funktion die Managmentsoftware 42 über Veränderungen des lokalen Netzwerks zu informieren. Die Verteilungsebene 44 ermittelt z.B. die Präsenz eines neuen oder den Verlust eines Netzknotens und teilt dies der Managementsoftware 42 mit. Damit die Verteilungsebene 44 diese Informationspflicht erfüllen kann, wird die Präsenz der Netzknoten und Stationen des lokalen Netzwerks periodisch in kurzen Intervallen geprüft. Hierbei werden zwischen einer Verteilungseinheit und einem zugeordneten Netzknoten oder einer zugeordneten Station über die in Fig. 9 gezeigte interne Schnittstelle (Nachrichtenwarteschlange 78) sogenannte "Lebend"-Nachrichten ausgetauscht. Wird eine solche "Lebend-Nachricht" von einem Systemteil nicht bestätigt, wird dies als nicht vorhandene Präsenz des Systemteils der Managementsoftware gemeldet.

Ein Namens-Server einer Verteilungseinheit hat noch die Aufgabe, daß während der Registrierung eines eingebetteten Objektes alle Namens-Server anderer Verteilungseinheiten zu fragen sind, ob das neue eingebettete Objekt zu irgendwelchen Widersprüchen führt. Hierbei kann das Verfahren vereinfacht oder effizienter gestaltet werden, wenn die Tabelle 74 des Namens-Servers der Verteilungseinheit nicht nur alle lokal eingebetteten Objekte, sondern auch einige entfernt eingebettete Objekte gespeichert hat. Welche entfernt eingebetteten Objekte in der Tabelle 74 gespeichert sind, hängt von den jeweiligen Funktionen der Objekte ab. Dabei ist es auch notwendig, daß der Namens-Server der Verteilungseinheit alle anderen Verteilungseinheiten sowohl über eine Objektregistrierung und eine Objektentfernung informiert als auch darüber, ob ein Objekt durch ein anderes Objekt ersetzt wird. Eine Ersetzung eines Objekts wird auch mittels des Namens-Servers durchgeführt.

Wie oben erwähnt, ruft die Objektrahmensoftware 45 Referenzen von Objekten auf, von denen eine Methode aufgerufen werden soll. Auf der Verteilungsebene 44 wird zuerst die Tabelle 74 des Namens-Servers einer Verteilungseinheit, welche mindestens die lokal eingebetteten Objekte speichert, durchsucht. Wenn die geeignete Objekt-Referenz nicht in dem jeweiligen Objekt zugeordneten Tabelle 74 vorhanden ist, dann werden alle entfernten Namens-Server aufgefordert, ihre entsprechenden Tabellen 74 zu untersuchen.

Es ist die Aufgabe der Informationsverwaltung 43, Informationen von Objekten der Steuerungs- und der Managementsoftware 41 und 42 und von der Firmware zu liefern. Da die meisten Informationen, insbesondere die Informationen von der Firmware in verschiedenen Systemteilen erzeugt werden, ist die Informationsverwaltung 43 ebenfalls in einer verteilten Form realisiert.

Wie oben schon ausgeführt speichert die Informationsverwaltung 43 über die Firmware den Status der physikalischen Schicht bzw. Hardware. Dies wird von der Informationsverwaltung 43 so durchgeführt, daß sie Objekte enthält, die Gegenstücke der realen Hardware bzw. Firmware sind und im folgenden als Vertreter-Objekte bezeichnet werden. Nachdem ein Vertreter-Objekt eine Nachricht von seinem realen Gegenstück erhalten hat, paßt es seinen Zustand den Veränderungen entsprechend an. Über ein solches Vertreter-Objekt bietet die Informationsverwaltung 43 der Steuerungs- und Managementsoftware 41 und 42 Zugang zur Hardware bzw. Firmware. Eine Änderung im Vertreter-Objekt, welche beispielsweise durch die Steuerungs- oder Managementsoftware 41 oder 42 veranlaßt worden ist, wird umgekehrt eine Änderung in dem entsprechenden Gegenstück der Hardware bzw. Firmware bewirken. Die Bereitstellung von Vertreter-Objekten ermöglicht den anderen Softwarekomponenten der verteilten Vermittlungssoftware eine Unabhängigkeit von der Hardware, da diese anderen Sofwarekomponenten nicht direkt mit den Hardwarekomponenten kommunizieren.

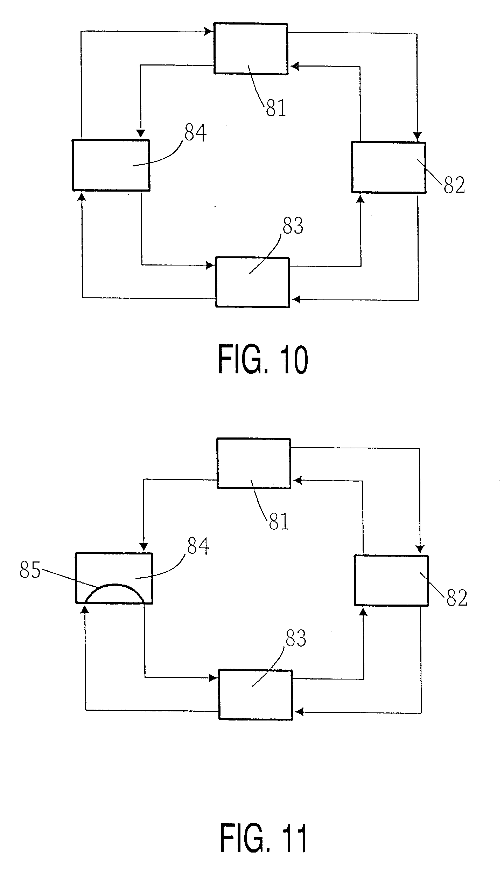

Die Funktionsweise der verteilten Vermittlungssoftware soll im folgenden anhand eines Beispiels erläutert werden. In Fig. 10 ist ein einfaches lokales Netzwerk mit einem inneren und einem äußeren Ring und vier Netzknoten 81 bis 84 dargestellt. Ein Netzknoten 81 bis 84 soll dabei so aufgebaut sein, wie dies Fig. 3 zeigt.

Es sei vorausgesetzt, daß die verteilte Vermittlungssoftware dafür eingerichtet ist, bei einer Ringunterbrechung, den Zellenstrom so zu steuern, daß ein Netzknoten vor der Ringunterbrechung die Zellen auf den anderen Ring schleift. Beispielsweise ist, wie in Fig. 11 dargestellt der äußere Ring zwischen den Netzknoten 81 und 84 unterbrochen. Nachdem der Fehler detektiert worden ist, wird eine Schleife 85 (loopback) vom äußeren Ring zum inneren Ring im Netzknoten 84 gelegt. Die wesentlichen Schritte, welche die verteilte Vermittlungssoftware für dieses Rekonfigurationsproblem durchführt, wird im folgenden beschrieben. Die verteilte Vermittlungssoftware enthält eingebettete Objekt welche die Rolle der Schaltungselemente 20 bis 22 für dieses Problem auf jedem Netzknoten 81 bis 84 übernehmen. Das für die Schaltungselemente 20 und 21, welche Ringanschlüsse aufweisen, jeweils existierende erste und zweite Objekt wird Assistent A1 und A2 genannt und das für das Schaltungselement 22, welches Stationsschlüsse aufweist, existierende Objekt wird Chef CH genannt. Die Objekte A1 und A2 detektieren lokale Ereignisse (z.B. Ringfehler) und steuern den Ringzugriff. Das dem Netzknoten 81 zugeordnete Objekt CH steuert die Kommunikation mit den Objekten CH, welche den anderen Netzknoten 82 bis 84 zugeordnet sind, und führt z.B. die Neuberechnung der Tabellen in den verschiedenen Wegespeicheranordnungen 16 und 17 durch.

Die Interaktionen zwischen den Objekten A1, A2 und CH bzw. zwischen den Objekten CH der verschiedenen Systemteile, d.h. der Aufruf von Methoden auf einem anderen Objekt und das Rücksenden von Ergebnisparametern werden über die Verteilungsebene 44 realisiert. Die eingebetteten Objekte A1, A2 und CH registrieren sich mit den Methoden, die von anderen Objekten aufgerufen werden können, in der zuständigen Verteilungseinheit und starten mit ihrem normalen Ablauf. Jeder Netzknoten 81 bis 84 enthält auch Objekte der Informationsverwaltung 43, welche jedem eingebetten Objekt einen Zugriff auf den Systemstatus ermöglichen.

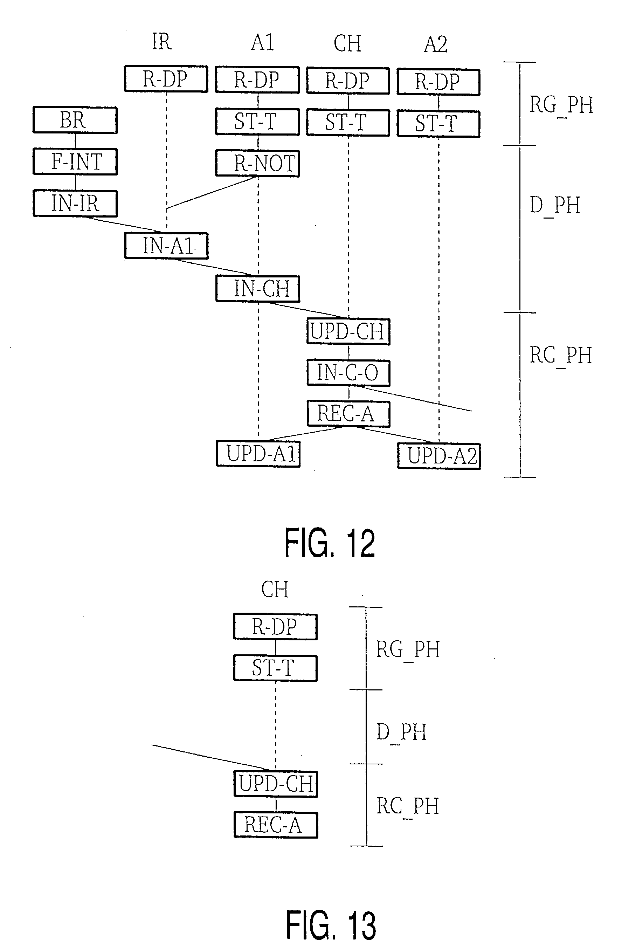

Die Interaktionen, welche die eingebetteten Objekte A1, A2 und CH nach einer Ringunterbrechung durchführen, werden im folgenden anhand der Fig. 12 und 13 erläutert. Der Vollständigkeit halber ist in den Fig. 12 und 13 außer einer Detektionsphase D_PH, in welcher die Ringunterbrechung festgestellt wird, und einer Rekonfigurationsphase RC_PH, in welcher z.B. die Wegetabellen 17 und 18 (vgl. Fig. 2) eines Schaltungselementes verändert werden, eine Registrierungsphase RG_PH dargestellt. Während der Registrierungsphase RG_PH werden die eingebetteten Objekte A1, A2 und CH und deren Methoden in der jeweils zuständigen Verteilungseinheit registriert. Diese Registrierung wird durch die Blöcke R-DP in den Fig. 12 und 13 angegeben. Danach werden alle Threads der eingebetteten Objekte A1, A2 und CH gestartet (Block ST-T). Auch ein Objekt IR der Informationsverwaltung 43 wird auf den jeweiligen Netzknoten registriert. In Fig. 12 sind die Interaktionen des Netzknotens 81 dargestellt für beide Objekte A1 und A2, das Objekt CH und das Objekt IR der Informationsverwaltung 43. Aus Übersichtsgründen sind in Fig. 13 nur Interaktionen des Objektes CH eines Netzknotens 82 bis 84 gezeigt.

Wenn eine Unterbrechung des äußeren Rings in dem Netzknoten 81 festgestellt worden ist (Block BR), erzeugt die Firmware einen Interrupt (Block F-INT). Das Objekt A1, welches dem Schaltungselement des Netzknotens 81 zugeordnet ist, das mit dem defekten Ring verbunden ist, teilt dem Objekt IR mit (R-NOT), daß es bei einem Ringfehler informiert werden muß. Über den Interupt wird das Objekt IR (Block IN-IR) informiert. Das Objekt IR informiert das Objekt A1 (Block IN-A1) und das Objekt A1 das Objekt CH (Block IN-CH). Diese Nachrichtenströme werden von der Verteilungsebene 44 gesteuert und benutzen die physikalische Schicht, indem Zellen zwischen den Schaltungselementen 20 bis 22 übertragen werden.

Zu Beginn der Rekonfigurationsphase RC PH wertet das Objekt CH (Fig. 12) die empfangenen Informationen aus und veranlaßt eine Veränderung der Wegespeicheranordnungen 16 und 17 in den Schaltungselementen 20 bis 22 der Netzknoten 81 bis 84 (Block UPD-CH). Dies wird dadurch realisiert, daß das Objekt CH des Netzknotens 81 die anderen Objekte CH der Netzknoten 82 bis 84 (IN-C-O) und seine zugeordneten Assistenten (Block REC-A) darüber informiert, daß die Wegetabellen geändert werden müssen. Die entsprechenden Daten werden mitgeliefert. Diese Auffrischung der Tabellen der Assistenten A1 und A2 wird in Fig 12 durch die Blöcke UPD-A1 und UPD-A2 angegeben. In der Fig. 13 ist durch den Block UPD-CH nur die Änderung beim Objekt CH angezeigt. Eine Änderung der Wegespeicheranordnungen 16 und 17 in den Schaltungselementen 20 und 21 der Netzknoten 82 bis 84 erfolgt ebenfalls durch die Objekte A1 und A2. Diese Änderung ist nicht dargestellt.

In den Fig. 12 und 13 sind Interaktionen zwischen eingebetteten Objekten dargestellt, die untereinander über Funktionen kommunizieren, die von der Verteilungsebene 44 und der Objektrahmensoftware 45 zur Verfügung gestellt werden. Die Funktionen und die Aktionen in der Registrierungsphase RG_PH, der Detektionsphase D_PH und der Rekonfigurationsphase RC_PH der eingebetteten Objekte werden in den folgenden Prozedurbeschreibungen dargestellt.

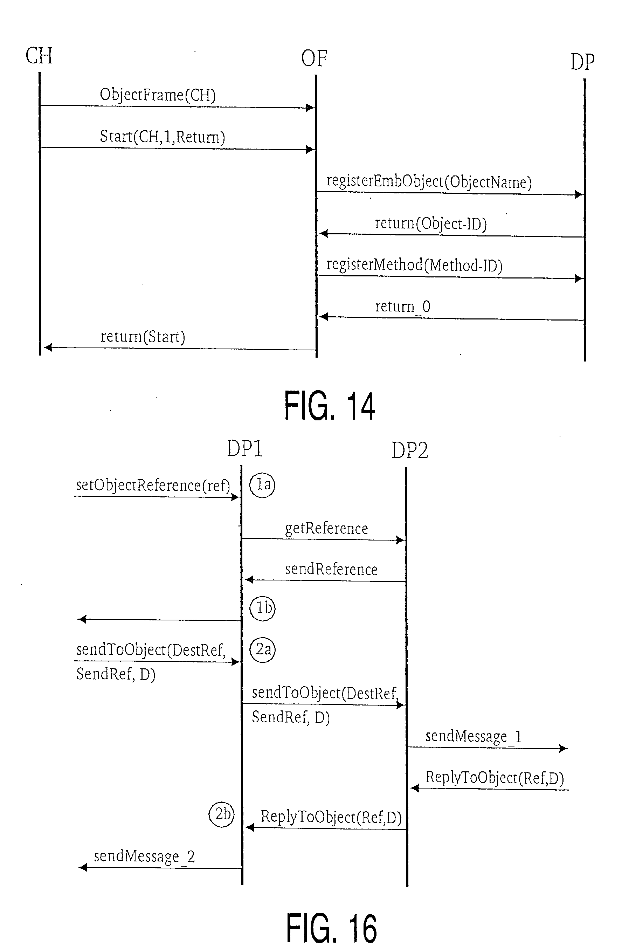

Zuerst wird die Prozedur während der Registrierungsphase RG PH anhand der Fig. 14 erläutert. Hierbei wird nur die Prozedur für die Registrierung des Objektes CH eines Netzknotens betrachtet. Die anderen notwendigen Registrierungsprozeduren erfolgen auf ähnliche Weise. Zuerst wird das Objekt CH über den Methodenaufruf ObjectFrame(CH) beim zuständigen Objektrahmen OF instantiiert und anschließend versucht, das Objekt CH beim Objektrahmen OF über den Methodenaufruf Start(CH,1,Return) aufzurufen. Die Zahl "1" in dem letztgenannten Methodenaufruf gibt an, daß ein zusätzlicher Thread zur Nachrichtenbehandlung mit dem Aufruf der Methode gestartet werden muß, und der Parameter "return", daß die Kontrolle zum Objekt CH zurückgegeben werden muß. Über den Methodenaufruf registerEmbObject(ObjectName) läßt der Objektrahmen bei der zugeordneten Verteilungseinheit DP der Verteilungsebene überprüfen, ob das Objekt bereits im lokalen Netzwerk existiert. Falls das nicht so ist, speichert die Verteilungseinheit DP das Objekt in seiner Objekt-Tabelle (vgl. Fig. 9) und vergibt eine Objekt-Identifikationsnummer (Object-ID). Ferner wird eine Nachrichtenwarteschlange für das neue Objekt erzeugt. Der mit return (Object-ID) bezeichnete Pfeil liefert dem Objektrahmen OF den Rückgabewert "Object-ID". Nach Empfang des Methodenaufrufs registerMethod(Method-ID) prüft die Verteilungseinheit DP, ob die zu registrierende Methode bereits mit einer Methoden-Identifikationsnummer Method-ID in einer Tabelle (vgl. Fig. 9) registriert ist. Falls dies nicht so ist, wird die Methoden-Identifikationsnummer in die Tabelle aufgenommen. Anschließend werden alle für das Objekt CH benötigten Threads erzeugt und gestartet und die Kontrolle zurück zum Objekt CH über die Rückgabewert return_0 und return (Start) gegeben.

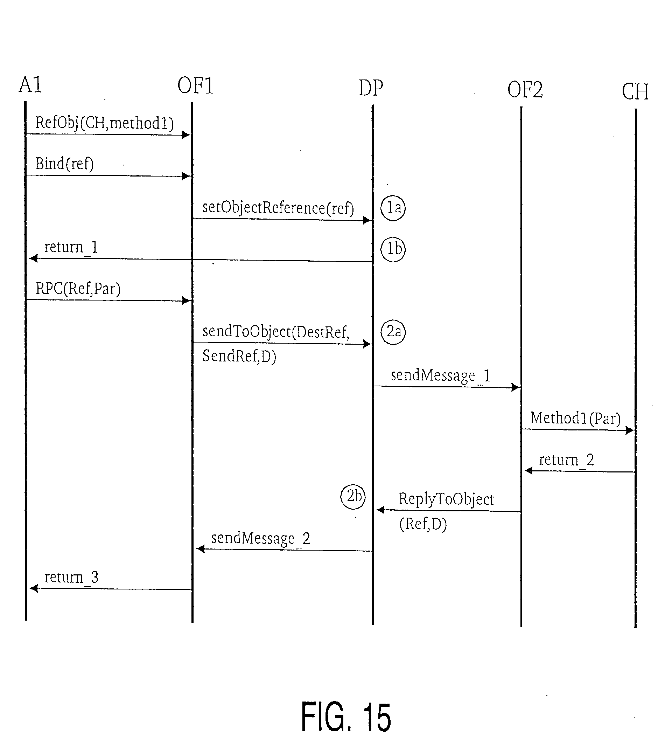

Während der Detektionsphase D_PH gibt es nur Interaktionen zwischen Objekten eines Netzknotens. In der Figur 15 ist die Prozedur für die Interaktionen zwischen dem Objekt A1 und dem Objekt CH bei der Detektion einer Ringunterbrechung. Die Interaktionen zwischen den Objekten A1 und CH und die Interaktionen mit der Informationsverwaltung erfolgen auf ähnliche Weise. Es sei bei der Fig. 15 vorausgesetzt, daß sich das Objekte A1 und CH und die aufzurufende Methode des Objektes CH bereits bei der zuständigen Verteilungseinheit DP registriert haben.

Mit dem Methodenaufruf RefObj(CH,method1) wird im Objektrahmen OF ein Referenzobjekt für die Methode method1 des Objektes CH erzeugt und mit dem Methodenaufruf Bind(ref) wird die Objekt-Referenz ref an die Objekt-Instanz gebunden. Der dem Objekt A1 zugeordnete Objektrahmen OF1 gibt an die Verteilungseinheit DP den Methodenaufruf setObjectReference(ref) weiter, womit eine Objekt-Instanz für die adressierte Objekt-Identifizierungsnummer gesucht wird. Falls sich die Objekt-Instanz auf dem der Verteilungseinheit DP zugeordneten Netzknoten befindet, wird die Kontrolle zurück an das Objekt A1 gegeben. Im anderen Fall müssen Verteilungseinheiten anderer Netzknoten gefragt werden, ob dort die Objekt-Identfizierung gespeichert ist. Die betreffende Schnittstelle zur Fig. 16 ist in Fig. 15 mit la gekennzeichnet. Anschließend wird die Kontrolle zurück zum Objekt A1 gegeben. Hier ist auch eine Schnittstelle 1b vorhanden, über welche die Kontrolle von einer Verteilungseinheit eines anderen Netzknotens zurückgegeben wird.

Der nächste Methodenaufruf RPC(Ref,Par), der vom eingebetteten Objekt A1 verwendet wird, soll eine Methode im Objekt CH aufrufen (RPC = remote procedure control). Der Parameter Ref weist auf die Methode hin, die im Objekt CH aufgerufen werden soll. Der Parameter Par enthält die Eingabeparameter der Methode. Der Objektrahmen OF1 führt dann den Methodenaufruf sendToObject(DestRef,SendRef,D) durch, mit dem eine Nachricht zum adressierten Objekt gesendet wird. Der Parameter DestRef gibt das aufgerufene Objekt CH, der Parameter SendRef das aufrufende Objekt A1 und der Parameter D Eingabedaten für diesen Aufruf an. Ist das adressierte Objekt auf dem dem Objekt A1 zugeordneten Netzknoten vorhanden, wird die entsprechende Methode des adressierten Objekts gerufen (sendMessage_1). Im anderen Fall, wenn sich das adressierte Objekt auf einem anderen Netzknoten befindet, wird die Methode in einem anderen Netzknoten weitergeführt (Schnittstelle 2a). Der dem Objekt CH zugeordnete Objektrahmen OF2 ruft die Methode Methodl mit dem entsprechenden Parameter Par zur Abarbeitung des Objektes CH. Das Ergebnis der Methodenbearbeitung wird vom Objekt CH zurück zum Objektrahmen OF2 geliefert (return_2) und vom Objektrahmen OF2 über den Methodenaufruf ReplyToObject(Ref,D) zur Verteilungseinheit DP. Da das Zielobjekt (Objekt A1) auf dem gleichen Netzknoten liegt, wird dessen Nachrichtenwarteschlange identifiziert und eine Nachricht mit Rückgabeparameter zum Objektrahmen OF1 des Objekts A1 gesendet (sendMessage_2). Hier ist eine weitere Schnittstelle 2b vorhanden, über welche Rückgabeparameter von einer Verteilungseinheit eines anderen Netzknotens übertragen werden, falls die aufgerufene Methode auf diesem Netzknoten sich befindet. Die Rückgabeparameter werden nach Identifizierung des Thread des rufenden Objekts übermittelt (return_3) und der Thread freigegeben.

In der Rekonfigurationsphase RC-PH sind neben den Interaktionen von Objekten auf einem zugeordneten Netzknoten auch Interaktionen zwischen Objekten erforderlich, die nicht auf dem gleichen Netzknoten liegen (wie auch in der Detektionsphase D_PH). Interaktionen werden in diesem Fall mittels Zellen durchgeführt. Im folgenden Beispiel wird von dem Objekt CH auf einem ersten Netzknoten eine Methode des Objektes CH auf einem anderen Netzknoten aufgerufen. Dieser Prozedurablauf ist dem in der Fig. 15 gezeigten ähnlich. Die Unterschiede sind in Fig. 16 aufgeführt. Hierbei findet auf der Verteilungsebene eine Kommunikation mit den Verteilungseinheiten DP1 und DP2 von zwei unterschiedlichen Netzknoten statt. Die Verteilungsebene DP1 erhält den Methodenaufruf setObjectReference(ref) und sucht dann die Objekt-Instanz für die adressierte Objekt-Identifizierungsnummer. An diesem Punkt liegt die Schnittstelle la, d.h. der Prozedurablauf bis zu dieser Schnittstelle entspricht dem aus Fig. 15. Falls die gesuchte Objekt-Instanz in dem Netzknoten mit der Verteilungseinheit DP1 registriert ist, erhält diese die Objektreferenz (getReference) und liefert eine Bestätigung über den Rückgabeparameter sendReference an die Verteilungseinheit DP1. Hier liegt dann die Schnittstelle 1b. Der Prozedurablauf stimmt dann wieder mit dem der Fig. 15 bis zur Schnittstelle 2a überein. Die Nachricht, welche über den Methodenaufruf sendToObject(DestRef,SendRef,D) zur Schnittstelle 2a geliefert wird, wird von der Verteilungseinheit DP1 mit dem Methodenaufruf sendToObject(DestRef,SendRef,D) zur Verteilungseinheit DP2 gesendet. Anschließend wird die entsprechende Methode über die Nachricht sendmessage_1 aufgerufen, abgearbeitet und die Ergebnisparameter über die Methodenaufrufe ReplyToObject(Ref,D) über die Verteilungseinheit DP2 zur Schnittstelle 2b geliefert.

## Patentansprüche

1. Lokales Netzwerk mit mehreren Netzknoten (7, 8), die jeweils mit wenigstens einer Station und/oder wenigstens einem anderen Netzknoten (7, 8) gekoppelt sind und jeweils zur Vermittlung von Paketen vorgesehen sind, die von einer Station oder einem Netzknoten (7, 8) erzeugt worden sind,
dadurch gekennzeichnet,
daß eine wenigstens für die Vermittlung zuständige und über alle Netzknoten (7, 8) und Stationen verteilte Vermittlungssoftware vorgesehen ist,
daß die verteilte Vermittlungssoftware für jeweils eine Anwendung ein Objekt zur Verfügung stellt, welches jeweils mit einer Komponente (55) einer Objektrahmensoftware (45) zur Objektregistrierung und zur Lenkung der Nachrichten von und zum Objekt verknüpft ist, und
daß auf jedem Netzknoten (7, 8) und jeder Station ein als Verteilungseinheit (52) bezeichnetes Objekt der verteilten Vermittlungssoftware enthalten ist, welches jeweils zur Übertragung und Steuerung der Nachrichten zwischen Objekten in einer Station oder einem Netzknoten (7, 8) und mit einer anderen Verteilungseinheit (52) vorgesehen ist.

2. Lokales Netzwerk nach Anspruch 1,
dadurch gekennzeichnet,
daß ein für eine Anwendung vorgesehenes erstes Objekt zu Beginn seiner Lebensdauer zur Meldung seiner Anwesenheit und seiner Methoden mittels einer Komponente (55) der Objektrahmensoftware an die zugeordnete Verteilungseinheit (52) vorgesehen ist,
daß die Komponente (55) der Objektrahmensoftware wenigstens einen Thread (57) zur Methodenausführung enthält, der nach Empfang einer Nachricht zum Aufruf einer Methode von einem zweiten Objekt vorgesehen ist, wenn diese Methode eine Methode des ersten Objektes ist, und
daß die Komponente (55) der Objektrahmensoftware einen Thread (60) zur Antwortbehandlung enthält, der eine Antwort von einem dritten Objekt nach Aufruf einer Methode erhält, die von dem ersten Objekt veranlaßt worden ist, und der die Antwort an einen wartenden Thread (57) zur Methodenausführung sendet.

3. Lokales Netzwerk nach Anspruch 2,
dadurch gekennzeichnet,
daß die Komponente (55) der Objektrahmensoftware zur Speicherung aller Methoden eines Objektes in einer Liste (58) vorgesehen ist,
daß die Komponente (55) der Objektrahmensoftware eine Aufrufwarteschlange (56) enthält, über die Nachrichten von einem Objekt zu wenigstens einem Thread (57) zur Methodenausführung übertragen werden, und
daß wenigstens ein Thread (57) zur Methodenausführung nach Empfang einer Nachricht zum Aufruf einer Methode zum Durchsuchen der Liste (58) und zum Aufruf der Methode vorgesehen ist, wenn die Methode in der Liste gefunden worden ist.

4. Lokales Netzwerk nach Anspruch 1,
dadurch gekennzeichnet,
daß eine Verteilungseinheit (73) einen ersten Thread (76) enthält,
- der zur Kommunikation mit den verschiedenen Komponenten (55) der Objektrahmensoftware eines zugeordneten Netzknotens (7, 8) oder einer zugeordneten Station und zur Sendung von Nachrichten zu anderen Verteilungseinheiten und
- der zur Speicherung von Objekten des Netzknotens (7, 8) oder der Station in einer ersten Tabelle (74) und von zugeordneten Methoden in einer zweiten Tabelle (75) vorgesehen ist, und
daß ein zweiter Thread (77) zum Empfang von Meldungen von anderen Verteilungseinheiten (52) vorgesehen ist.

5. Lokales Netzwerk nach Anspruch 4,
dadurch gekennzeichnet,
daß der erste Thread (76) zum Empfang von Nachrichten einer Komponente (55) der Objektrahmensoftware über eine Nachrichtenwarteschlange (78) vorgesehen ist und
daß der erste Thread (76) zur Prüfung vorgesehen ist, ob ein Objekt mit einem anderen Objekt kollidiert, und dann nach Feststellung, daß keine Kollision vorliegt, zur Speicherung eines Objektes in der ersten Tabelle (74) vorgesehen ist.

6. Lokales Netzwerk nach Anspruch 4,
dadurch gekennzeichnet,
daß der zweite Thread (77) zum Empfang von Nachrichten über eine Antwortwarteschlange (80) von einer anderen Verteilungseinheit vorgesehen ist und
daß die Nachrichten Antworten zu, von dem ersten Thread (76) veranlaßten Methodenaufrufen sind.

7. Lokales Netzwerk nach Anspruch 4,
dadurch gekennzeichnet,
daß der erste Thread (76) zur Speicherung von Objekten anderer Netzknoten (7, 8) und Stationen vorgesehen ist.

8. Lokales Netzwerk nach Anspruch 4,
dadurch gekennzeichnet,
der erste Thread (76) zum Austausch von bestimmten Nachrichten mit den Objekten des zugeordneten Netzknotens (7, 8) oder der zugeordneten Station vorgesehen ist,
daß der erste Thread (76) zur Feststellung der Präsenz des Netzknotens (7, 8) oder der Station vorgesehen ist und
daß der Netzknoten (7, 8) oder die Station nicht präsent ist, wenn auf die bestimmte Nachricht keine Antwort von dem Netzknoten (7, 8) oder der Station empfangen wird.
